# EUROPEAN PATENT APPLICATION

(11) **EP 1 217 271 A1**
(43) Date of publication of application: **26.06.2002**
(21) Application number: 01500288.4
(22) Date of filing: 19.12.2001
(51) Int. Cl.: F16K 15/06

(54) **Check valve**

(30) Priority: 21.12.2000 ES 200003069
(71) Applicant: Genebre, S.A., 08908 l'Hospitalet de Llobregat (Barcelona) (ES)
(72) Inventor: Monterde Fabregat, Lluis, c/o Genebre, S.A., 08908 L'Hosp. De Llobregat (Barcelona) (ES)
(74) Representative: Pastells Teixido, Manuel

(57) **Abstract**

This check valve is characterized in that the valve body (1) is a one-piece tubular member being in one of its openings removably fitted with a member being provided to retain the valve's inner active shutoff members, in the opening being opposite to the one being provided with the retaining member (4) said body being formed with the valve seat (12) being provided to cooperate with the valve head (10). The retaining member at the same time forms a coaxial guide being provided to guide the valve head carrying stem (9), said retaining member also forming a stop for the coaxial spring (11) being arranged between the retaining member and the valve head, said retaining member being formed by an externally threaded ring (6) being fitted in a threaded connection to the corresponding opening of the body and comprising a diametral length being centrally formed with the cylindrical guide being provided for guiding the valve head carrying stem.

## Description

Check valves are already known which comprise two pieces forming the valve body in whose inside the valve's shutoff members are installed, said two pieces being fitted to each other through a threaded connection generally being sealed by means of an adequate glue.

These known valves have the drawback that during their installation or later on when in use a loosening or unscrewing of the threaded connection joining the two pieces forming the valve body can possibly take place thus causing undesired leaks.

Another problem of these valves lies in the difficulty for repairing or replacing some of the valve's inner shutoff members.

This invention has as its object a check valve obviating said problems and for such a purpose having a one-piece body being in one of its openings fitted with a member being provided to retain the active shutoff members being introduced into said body through said opening.

The retaining member is fitted in a threaded connection to the corresponding opening of the one-piece body and is centrally formed with a guide for the stem carrying the valve head.

In the opening being opposite to the above-mentioned one the body is formed with the valve seat being provided to cooperate with the valve head, said body in said opening being as well formed with another quide for the valve head carrying stem.

The aforementioned retaining member forms the stop retaining the spring being coaxially fitted around the valve head carrying stem and arranged between said retaining member and the valve head.

These and other characteristics will be best made apparent by the following detailed description whose understanding will be made easier by the accompanying two sheets of drawings showing a practical embodiment cited only by way of example not limiting the scope of the present invention.

In the drawings:
Figs. 1 and 2 show in a sectional elevation the check valve being the object of the invention in the open and closed positions, respectively, said valve's valve head being provided with an O-ring seal,
Figs. 3 and 4 illustrate the one-piece body of the valve in an elevational view and in a plan-view, respectively, and
Fig. 5 is a sectional elevation showing the valve in its closed position, the valve head being in this case provided with a flat seal.

According to the drawings this check valve comprises a one-piece body 1 of tubular shape forming two opposite, threaded openings 2 and 3.

Opening 2 is fitted in a threaded connection with a member 4 being provided to retain the inner active shutoff members 5. Said retaining member 4 is formed by an externally threaded ring 6 being formed with a diametral length 7 being centrally provided with a cylindrical guide 8 for the stem 9 carrying the valve head 10 being made of stainless steel or injection-moulded plastics material.

The retaining member 4 forms as well a stop for the spring 11 being coaxially arranged between said member and the valve head 10.

Opening 3 of body 1 is formed with the valve seat 12 being provided to cooperate with the valve head, and said opening has been provided with a transversal length 13 being centrally formed with a ring 14 being also provided to guide the stem 9.

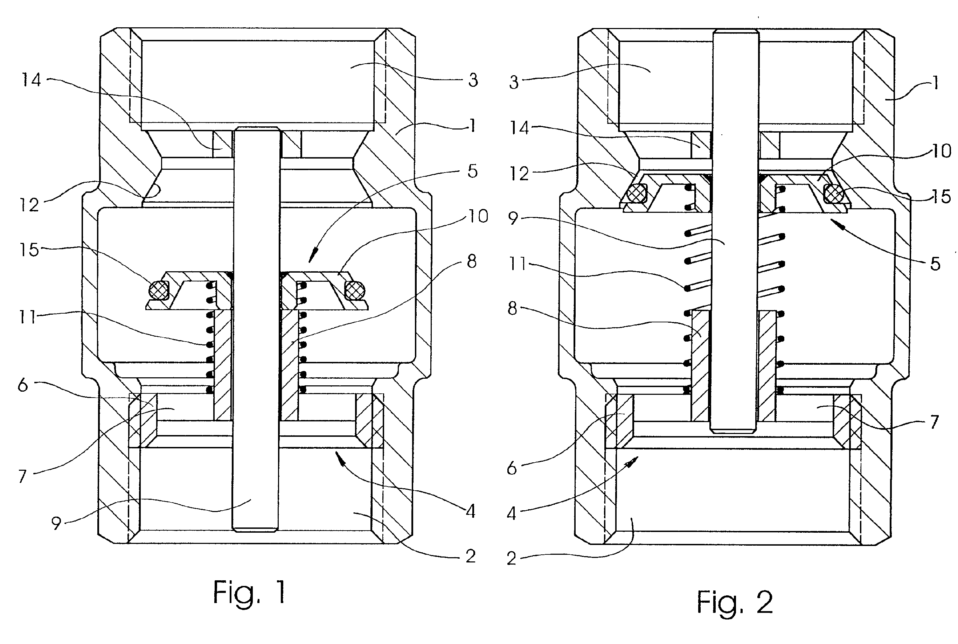

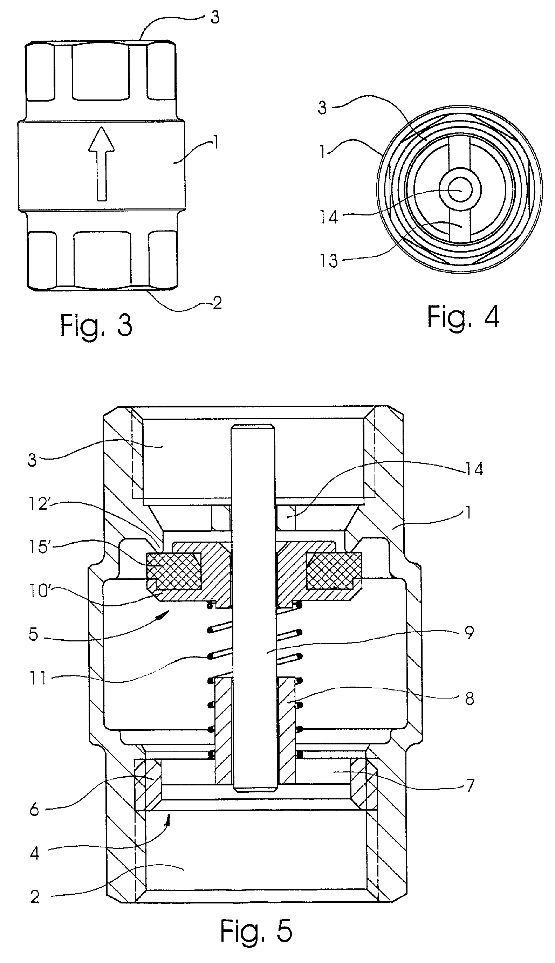

In Figs. 1 and 2 the valve seat 12 being provided to cooperate with the valve head is a tapered seat, and the valve head 10 comprises an O-ring seal 15, and in Fig. 5 the valve seat 12' being provided to cooperate with the valve head forms a circular edge, and the valve head 10' comprises a flat seal 15'.

## Claims

1. A check valve **characterized in that** the body is a one-piece tubular body being in one of its openings removably fitted with a member being provided to retain the valve's inner active shutoff members.

2. A check valve as per claim 1, **characterized in that** in the opening being opposite to that being provided with the retaining member the body is formed with the valve seat being provided to cooperate with the valve head.

3. A check valve as per claim 1, **characterized in that** the retaining member at the same time forms a coaxial guide for the valve head carrying stem and a stop for the coaxial spring being arranged between the retaining member and the valve head.

4. A check valve as per claims 1 and 3, **characterized in that** the retaining member is formed by an externally threaded ring being fitted in a threaded connection to the corresponding opening of the body and comprising a diametral length being centrally formed with the cylindrical guide being provided for guiding the valve head carrying stem.

5. A check valve as per the preceding claims, **characterized in that** the valve seat being provided to cooperate with the valve head is a tapered seat, and the valve head comprises an O-ring seal.

6. A check valve as per the preceding claims, **characterized in that** the valve seat being provided to cooperate with the valve head forms a circular edge, and the valve head comprises a flat seal.

7. A check valve as per claims 1 and 3, **characterized in that** the body's opening forming the valve seat being provided to cooperate with the valve head is formed with a transversal length being centrally formed with a ring being provided to guide the valve head carrying stem.
